(19) Europäisches Patentamt
European Patent Office
Office européen des brevets

(11) Veröffentlichungsnummer: **0 064 631**
**B1**

(12) **EUROPÄISCHE PATENTSCHRIFT**

(45) Veröffentlichungstag der Patentschrift: **31.07.85**

(51) Int. Cl.[4]: **C 09 B 69/00**, D 21 H 3/82, C 09 B 25/00, C 09 B 19/02, C 09 B 7/02, C 09 B 11/04, C 09 B 11/24

(21) Anmeldenummer: **82103367.7**

(22) Anmeldetag: **21.04.82**

(54) **Kationische Farbstoffe, deren Verwendung zum Färben und Bedrucken von Papier und mit diesen Farbstoffen gefärbtes oder bedrucktes Papier.**

(30) Priorität: **07.05.81 DE 3117956**

(43) Veröffentlichungstag der Anmeldung: **17.11.82 Patentblatt 82/46**

(45) Bekanntmachung des Hinweises auf die Patenterteilung: **31.07.85 Patentblatt 85/31**

(84) Benannte Vertragsstaaten: **CH DE FR GB IT LI**

(56) Entgegenhaltungen:
**DE - A - 1 444 730**
**FR - A - 1 486 752**
**GB - A - 717 137**
**GB - A - 914 249**
**GB - A - 1 367 635**

(73) Patentinhaber: **BASF Aktiengesellschaft, Carl-Bosch-Strasse 38, D-6700 Ludwigshafen (DE)**

(72) Erfinder: **Patsch, Manfred, Dr., Fritz-Wendel-Strasse 4, D-6706 Wachenheim (DE)**
Erfinder: **Ruske, Manfred, Merziger Strasse 10, D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

EP 0 064 631 B1

**Beschreibung**

Die Erfindung betrifft neue kationische Farbstoffe, deren Verwendung zum Färben und Bedrucken von Papier und mit diesen Farbstoffen gefärbtes oder bedrucktes Papier.

Die neuen Farbstoffe entsprechen der Formel I

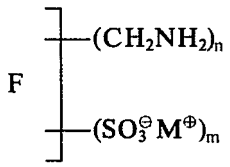

(I)

in der

F ein (n+m)-wertiger Rest eines Chinophthalon-, Dioxazin-, Indigo-, Chinacridon-, Triphenylmethan- oder Rhodaminfarbstoffs,
$M^{\oplus}$ $H^{\oplus}$ oder ein Äquivalent eines Metallkations,
m 0, 1 oder 2 und
n 1, 2, 3 oder 4 bedeuten.

Bevorzugt sind Farbstoffe der Formel I, in der F ein (m+n)-wertiger Rest ist, der sich vom Benzochinophthalon, Bis-dichlordioxazin oder vom Rhodamin ableitet.

Besonders bevorzugt sind Farbstoffe der Formeln

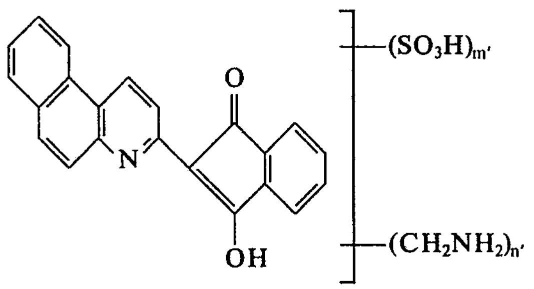

(II)

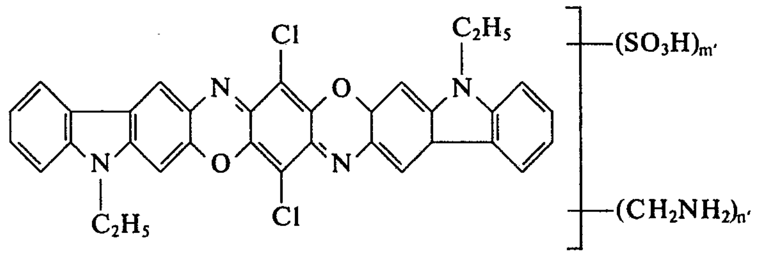

(III)

und

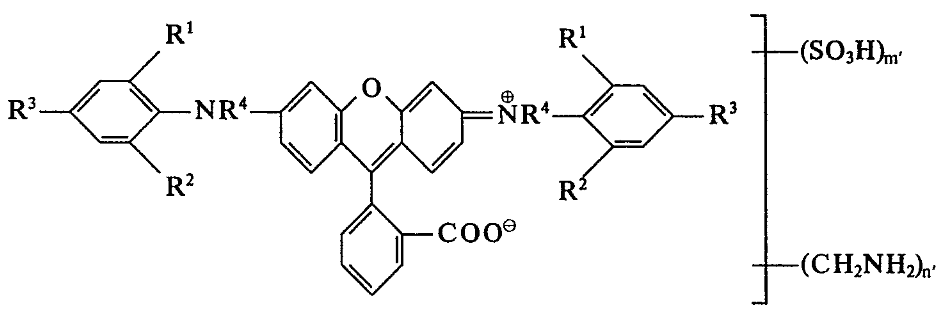

(IV)

In den Formeln stehen $R^1$, $R^2$ und $R^3$ unabhängig voneinander für H, $C_1-C_4$-Alkyl oder Halogen, wie Chlor oder Brom und $R^4$ für H oder $C_1-C_4$-Alkyl und m' für im Mittel 0 bis 1 und n' für im Mittel 1 bis 3.

Von den Farbstoffen der Formel IV sind solche bevorzugt, in der $R^4$ und $R^3$ Wasserstoff sind. Besonders bevorzugt sind von diesen Farbstoffen ($R^3 = R^4 = H$), in denen $R^1 = H$ und $R^2 = -CH_3$ oder $R^1 = R^2 = -CH_3$ oder $R^1 = -CH_3$ und $R^2 = -C_2H_5$ bedeuten.

Für $Me^{\oplus}$ kommen neben $H^{\oplus}$ vor allem Alkalimetallionen wie $Na^{\oplus}$, $K^{\oplus}$, $Li^{\oplus}$ und $(NH_4)^{\oplus}$ in Betracht, ferner auch die Kationen der Erdalkalimetalle, wenn diese in Wasser lösliche Salze mit (I) geben.

Die Farbstoffe I werden durch Umsetzen der Farbstoffe $F\text{-}(H)_{m+n}$ mit N-Methylolcarbonsäureamiden in Gegenwart von wasserentziehenden Mitteln und anschließender Hydrolyse erhalten.

Als N-Methylolcarbonsäureamide kommen aus wirtschaftlichen Gründen vor allem die der niederen aliphatischen Carbonsäuren in Betracht.

Bevorzugte N-Methylolcarbonsäureamide sind N-Methylolformamid und -acetamid.

Als wasserentziehendes Mittel kommt z. B. konzentrierte Schwefelsäure oder 85gew.%ige Phosphorsäure in Betracht. Die Umsetzung erfolgt vorzugsweise in konzentrierter Schwefelsäure, die gleichzeitig auch als Reaktionsmedium dient.

Die Umsetzung wird bei Temperaturen von 0 bis 80°C, bevorzugt bei 5 bis 30°C durchgeführt. Die Hydrolyse erfolgt in verdünnter Mineralsäure, bevorzugt in verdünnter Schwefelsäure, bei 60 bis 90°C.

Diese Herstellung der Farbstoffe ist toxikologisch unbedenklich und kann im Gegensatz zur alternativen Herstellung über Chlormethylierung ohne besondere Sicherheitsmaßnahmen durchgeführt werden.

Die neuen Farbstoffe der Formel I und ihre Salze sind sehr gut für das Färben oder Bedrucken von Papier geeignet. Sie besitzen hohe Affinität zu diesem Material und geben beim Färbeprozeß ein praktisch farbloses Abwasser. Darüber hinaus besitzen die neuen Farbstoffe gute Ausblutechtheit und z.T. auch gute Lichtechtheit. Das mit den neuen Farbstoffen gefärbte oder bedruckte Papier kann mit Hilfe von Bleichmitteln praktisch vollständig entfärbt werden. Dies ist für eine Wiederverwendung von Vorteil.

Die Erfindung soll durch die folgenden Ausführungsbeispiele zusätzlich erläutert werden. Die genannten Teile und Prozentangaben beziehen sich auf das Gewicht.

Beispiel 1

Zu 130 Teilen 96%iger Schwefelsäure werden bei 0 bis 5°C 13,1 Teile Indigo und 28,1 Teile N-Methylolformamid eingetragen und 16 Stunden bei 0 bis 5°C und 48 Stunden bei 23°C gerührt. Die Mischung wird auf 1100 Teile Wasser ausgefällt, eine Stunde bei 90 bis 95°C gerührt und die Lösung mit 25%igem Ammoniak auf pH 10,0 gestellt. Die Fällung wird abgesaugt, mit Wasser neutral gewaschen und bei 80°C getrocknet. Ausbeute: 16,7 Teile Farbstoff der Formel

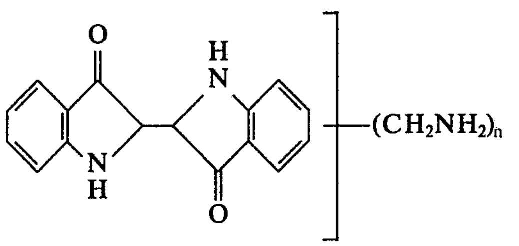

$\bar{n} \approx 1,1$

Analyse für n = 1 $C_{17}H_{13}N_3O_2$ (262) ber. N 14,4
für n = 2 $C_{18}H_{14}N_4O_2$ (318) ber. N 17,6
gef. N 14,6

Der Farbstoff ist in 30%iger Essigsäure löslich und färbt Papier in kräftigem Blauton.

Beispiel 2

a) Zu einer Lösung aus 30 Teilen N-Hydroxymethylformamid in 300 Teilen konz. Schwefelsäure trägt man bei 0 bis 5°C 29,5 Teile C. I. Pigmentviolett 23 (C.I.Nr. 51 319) ein. Man rührt 10 Stunden bei Raumtemperatur, 6 Stunden bei 35°C und gießt anschließend auf 2000 Teile Eis. Das Produkt wird abgesaugt und im Vakuum bei 50°C getrocknet. Ausbeute: 30 Teile Formylaminomethylverbindung der Formel

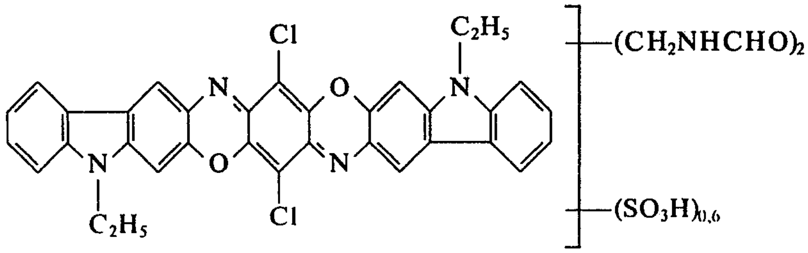

b) 30 Teile der nach a) erhaltenen Verbindung werden in 2000 Teilen 20%iger Schwefelsäure während 2 Stunden auf 95 bis 100°C erhitzt. Dann saugt man ab, wäscht mit verdünntem, wäßrigem Ammoniak neutral und trocknet im Vakuum bei 50°C. Ausbeute: 29 Teile Farbstoff der Formel

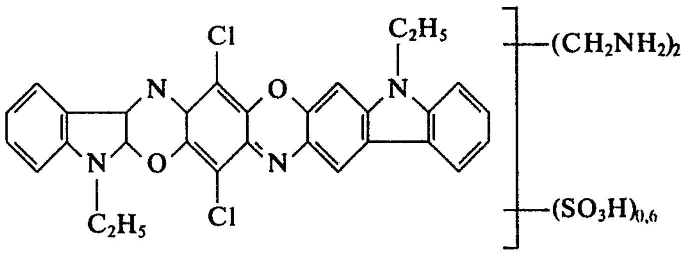

λmax. in 5%iger Essigsäure 585 nm
N gef. 11,9%, S gef. 2,6%
N ber. 12,0%, S ber. 2,7%

## Beispiel 3

Zu einer Lösung aus 30 Teilen N-Hydroxymethylformamid in 150 Teilen konz. Schwefelsäure gibt man bei 0 bis 5°C portionsweise 16,5 Teile 2-[1,3-Dioxohydrinyl-(2)]-5,6-benzochinolin. Man rührt 30 Stunden bei 25 bis 30°C, verdünnt mit 1500 Teilen Wasser und erhitzt weitere 3 Stunden auf 90 bis 95°C, neutralisiert, kühlt auf Raumtemperatur und saugt ab. Nach Trocknen im Vakuum bei 60°C erhält man 18 Teile des Farbstoffs der Formel

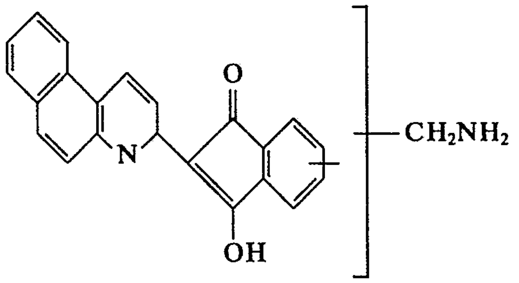

λmax. (in 3%iger Essigsäure): 419 nm
N gef. 8,1%, S gef. 0,1%
N ber. 7,95%, S ber. 0,0%

## Beispiel 4

Zu einer Lösung von 25,5 Teilen Solvent Violett 10 (C.I.Nr. 45 190) in 150 Teilen konz. Schwefelsäure tropft man bei 0 bis 5°C 37,5 Teile N-Hydroxymethylformamid. Man läßt auf 20 bis 25°C erwärmen und rührt bei dieser Temperatur weitere 15 Stunden. Das Reaktionsgemisch wird auf 1500 Teile Wasser gegossen und 3 Stunden auf 90 bis 95°C erhitzt. Man neutralisiert, saugt ab und isoliert 37 Teile des Farbstoffs der Formel

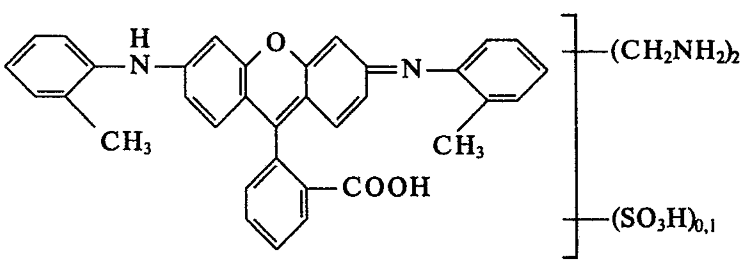

λmax. (in 3%iger Essigsäure): 532 nm
N gef. 9,2%, S gef. 0,6%
N ber. 9,72%, S ber. 0,55%

## Beispiel 5

Man verfährt wie in Beispiel 4 und verwendet jedoch anstelle von Solvent Violett 10 29,3 Teile C.I. Solvent Dye Nr. 45 195. Man isoliert 30 Teile des Farbstoffs der Formel

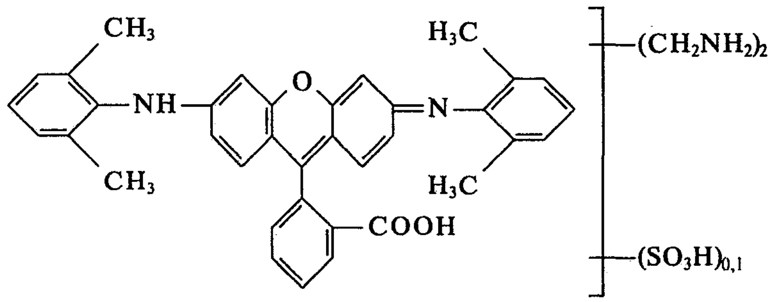

$\lambda$max. (in 3%iger Essigsäure): 530 nm
N gef. 9,1%, S gef. 0,5%
N ber. 9,28%, S ber. 0,53%

## Beispiel 6

Man verfährt wie in Beispiel 4, verwendet jedoch als Farbstoff das Kondensationsprodukt von 2 Mol 2-Methyl-6-ethylanilin mit 3,6-Dichlorfluoran. Ausbeute: 34 Teile des Farbstoffs der Formel

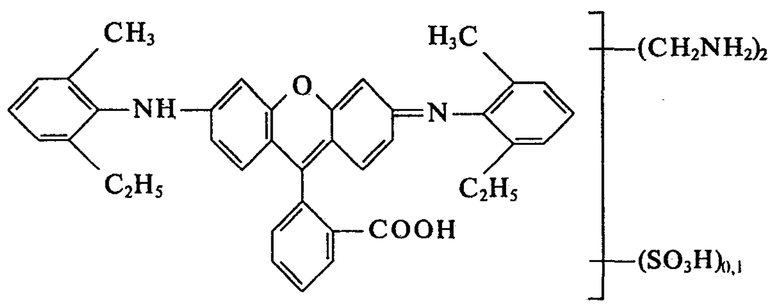

$\lambda$max. (in 3%iger Essigsäure): 528 nm
N gef. 8,9%, S gef. 0,4%
N ber. 8,49%, S ber. 0,48%

**Patentansprüche**

1. Farbstoffe der Formel

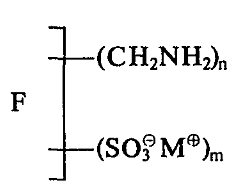

(I)

in der

F ein (m+n)-wertiger Rest eines Chinophthalon-, Dioxazin-, Indigo-, Chinacridon-, Triphenylmethan- oder Rhodaminfarbstoffs,
$M^{\oplus}$ $H^{\oplus}$ oder ein Äquivalent eines Metallkations,
m 0, 1 oder 2 und
n 1, 2, 3 oder 4 bedeuten.

2. Farbstoffe gemäß Anspruch 1, dadurch gekennzeichnet, daß F ein (m+n)-wertiger Rest eines Benzochinophthalons, Bis-dichlordioxazins oder Rhodamins ist.

3. Farbstoff gemäß Anspruch 1, gekennzeichnet durch die Formel

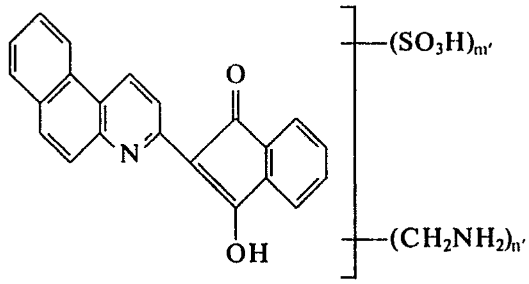

wobei m' im Mittel 0,1 und n' im Mittel 1,1 sind.

4. Farbstoff gemäß Anspruch 1, gekennzeichnet durch die Formel

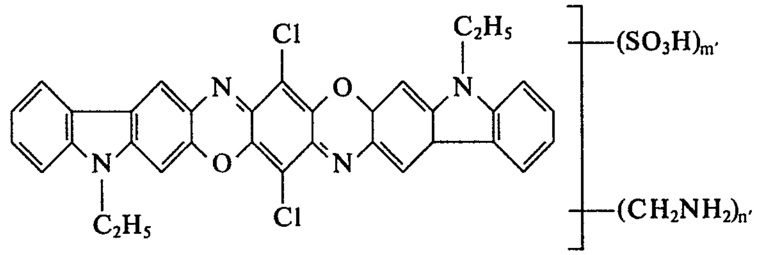

wobei m' im Mittel 0,5 bis 1 und n' im Mittel 1 bis 3 sind.

5. Farbstoff gemäß Anspruch 1, gekennzeichnet durch die Formel

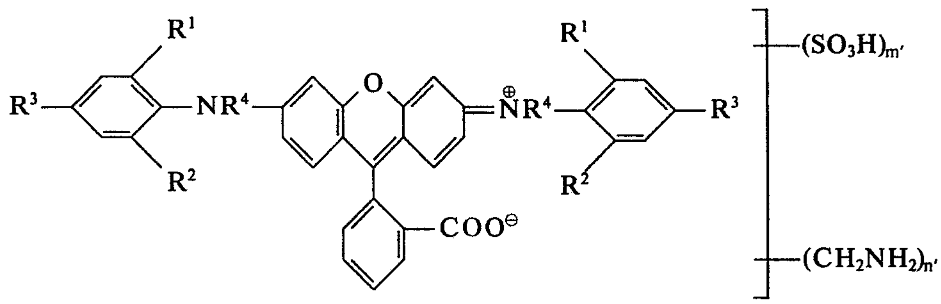

wobei m' im Mittel 0 bis 0,5 und n' im Mittel 1,5 bis 3 sind und $R^1$, $R^2$ und $R^3$ unabhängig voneinander für Wasserstoff, $C_1$- bis $C_4$-Alkyl oder Halogen und $R^4$ für Wasserstoff oder $C_1$- bis $C_4$-Alkyl stehen.

6. Farbstoff gemäß Anspruch 5, dadurch gekennzeichnet, daß $R^1$ und $R^3$ für Wasserstoff und $R^2$ für Methyl oder $R^3$ für Wasserstoff und $R^1$ und $R^2$ für Methyl oder $R^3$ für Wasserstoff, $R^1$ für Methyl und $R^2$ für Ethyl stehen.

7. Verwendung der Farbstoffe gemäß den Ansprüchen 1 bis 6 zum Färben und Bedrucken von Papier.

8. Gefärbtes oder bedrucktes Papier, enthaltend Farbstoffe gemäß den Ansprüchen 1 bis 6.

**Claims**

1. A dye of the formula

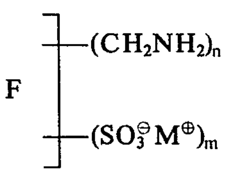

(I)

where

F is an (m + n)-valent radical of a quinophthalone, dioxazine, indigo, quinacridone, triphenylmethane or rhodamine dye,

$M^{\oplus}$ is $H^{\oplus}$ or one equivalent of a metal cation,
m is 0, 1 or 2 and
n is 1, 2, 3 or 4.

2. A dye as claimed in claim 1, wherein F is an (m + n)-valent radical of a benzoquinophthalone, bis-dichlorodioxazine or rhodamine.

3. A dye, as claimed in claim 1, of the formula

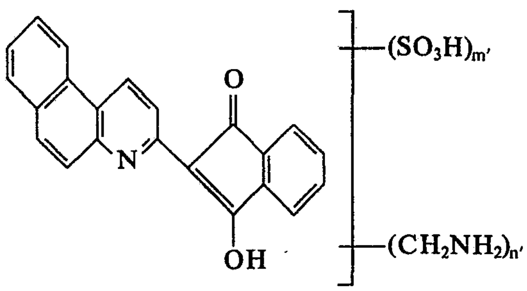

where m' has a mean value of 0.1 and n' has a mean value of 1.1.

4. A dye, as claimed in claim 1, of the formula

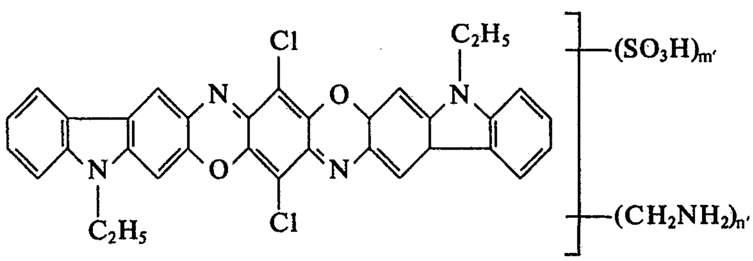

where m' has a mean value of from 0.5 to 1 and n' has a mean value of 1 to 3.

5. A dye, as claimed in claim 1, of the formula

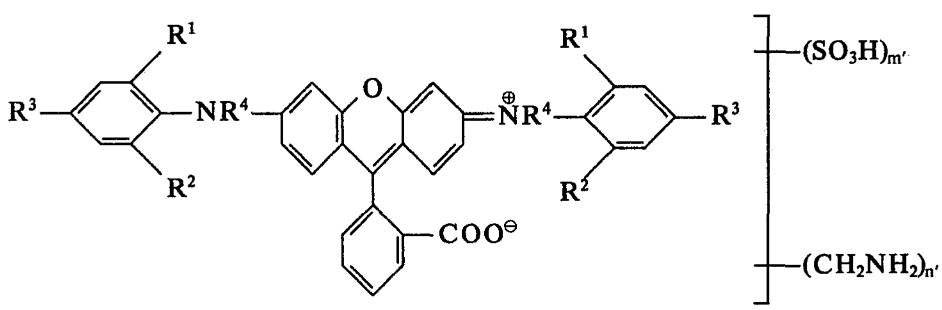

where m' has a mean value of from 0 to 0.5 and n' has a mean value of from 1.5 to 3, $R^1$, $R^2$ and $R^3$, independently of one another, are hydrogen, $C_1-C_4$-alkyl or halogen, and $R^4$ is hydrogen or $C_1-C_4$-alkyl.

6. A dye as claimed in claim 5, wherein $R^1$ and $R^3$ are each hydrogen and $R^2$ is methyl, or $R^3$ is hydrogen and $R^1$ and $R^2$ are each methyl, or $R^3$ is hydrogen, $R^1$ is methyl and $R^2$ is ethyl.

7. The use of a dye as claimed in claims 1 to 6 for dyeing and printing paper.

8. Dyed or printed paper containing a dye as claimed in claims 1 to 6.

## Revendications

1. Colorants de formule

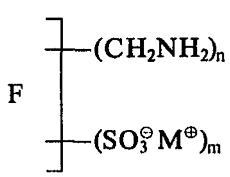

(I)

dans laquelle:

F représente un radical (n + m)-valent d'un colorant des familles de la quinophtalone, de la dioxazine, de l'indigo, de la quinacridone, du triphénylméthane ou de la rhodamine,
$M^{\oplus}$ represente $H^{\oplus}$ ou un équivalent d'un cation métallique,
m est mis pour 0, 1 ou 2 et
n est mis pour 1, 2, 3 ou 4.

2. Colorants selon la revendication 1, caractérisés en ce que F est un radical (m + n)-valent d'une benzoquinophtalone, d'une bis-dichlorodioxazine ou d'une rhodamine.

3. Colorant selon la revendication 1, caractérisé par la formule

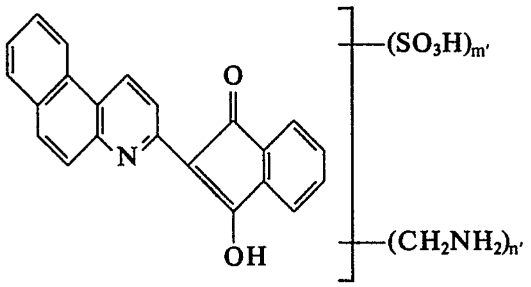

m' étant égal à 0,1 en moyenne et n' à 1,1 en moyenne.

4. Colorant selon la revendication 1, caractérisé par la formule

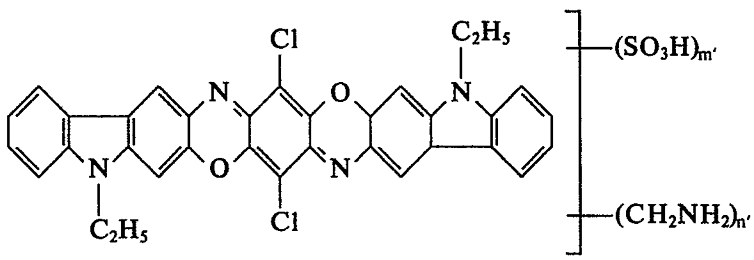

m' étant compris entre 0,5 et 1 en moyenne et n' entre 1 et 3 en moyenne.

5. Colorant selon la revendication 1, caractérisé par la formule

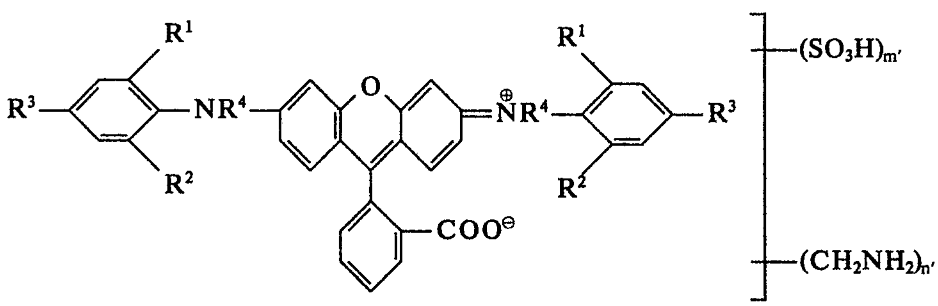

m' étant compris entre 0 et 0,5 en moyenne et n' entre 1,5 et 3 en moyenne et $R^1$, $R^2$ et $R^3$ étant mis, indépendamment les uns des autres, pour H, un alkyle en $C_1$ à $C_4$ ou un halogène et $R^4$ pour H ou un alkyle en $C_1$ à $C_4$.

6. Colorant selon la revendication 5, caractérisé en ce que $R^1$ et $R^3$ sont mis chacun pour un atome d'hydrogène et $R^2$ pour un radical méthyle ou $R^3$ est mis pour un atome d'hydrogène et $R^1$ et $R^2$ sont mis chacun pour un radical méthyle ou encore $R^3$ est mis pour un atome d'hydrogène, $R^1$ pour un radical méthyle et $R^2$ pour un radical éthyle.

7. Utilisation des colorants selon l'une quelconque des revendications 1 à 6 pour la teinture et l'impression de papier.

8. Papier teint ou imprimé, contenant des colorants selon l'une quelconque des revendications 1 à 6.